# EUROPÄISCHE PATENTSCHRIFT

(11) **EP 2 748 442 B1**
(45) Veröffentlichungstag und Bekanntmachung des Hinweises auf die Patenterteilung: **23.03.2016**
(21) Anmeldenummer: 12748396.4
(22) Anmeldetag: 17.08.2012
(51) Int. Cl.: F02B 41/04, F02B 51/02, F02G 1/057, F02G 5/02

(54) **VERFAHREN ZUM BETREIBEN EINER HUBKOLBENBRENNKRAFTMASCHINE MIT INTERNER ABGASENERGIEREKUPERATION SOWIE HUBKOLBENBRENNKRAFTMASCHINE**
METHOD FOR OPERATING A RECIPROCATING PISTON INTERNAL COMBUSTION ENGINE WITH INTERNAL EXHAUST GAS ENERGY RECUPERATION AND RECIPROCATING PISTON INTERNAL COMBUSTION ENGINE
PROCÉDÉ PERMETTANT DE FAIRE FONCTIONNER UN MOTEUR À COMBUSTION INTERNE À PISTON ALTERNATIF À RÉCUPÉRATION INTERNE DE L'ÉNERGIE DES GAZ D'ÉCHAPPEMENT ET MOTEUR À COMBUSTION À PISTON ALTERNATIF

(30) Priorität: 24.08.2011 DE 102011111761
(43) Veröffentlichungstag der Anmeldung: 02.07.2014
(73) Patentinhaber: Meta Motoren- Und Energie-Technik GmbH, 52134 Herzogenrath (DE)
(72) Erfinder: KREUTER, Peter, 52072 Aachen (DE)
(74) Vertreter: Kramer Barske Schmidtchen Patentanwälte PartG mbB
(86) Internationale Anmeldenummer: PCT/EP2012/003511
(87) Internationale Veröffentlichungsnummer: WO 2013/026552

(56) Entgegenhaltungen:
- US-A- 4 074 533
- US-A- 4 280 468
- US-A- 4 413 475
- US-A- 4 630 447
- US-A- 4 790 284

## Beschreibung

Die Erfindung betrifft ein Verfahren zum Betreiben einer Hubkolbenbrennkraftmaschine mit interner Abgasrekuperation. Die Erfindung betrifft weiter eine Hubkolbenbrennkraftmaschine mit interner Abgasrekuperation.

Aus der US 4,790,284 ist eine Hubkolbenbrennkraftmaschine mit interner Abgasenergierekuperation bekannt, bei der in den Zylindern der Brennkraftmaschine zwischen dem jeweiligen Kolben und dem Zylinderkopf ein insgesamt scheibenförmiger Rekuperator hin und her beweglich ist. Der Rekuperator füllt den gesamten Zylinderquerschnitt aus und ist mittels eines durch den Zylinderkopf unter Abdichtung hindurch geführten Schaftes beweglich. Im Zylinder befindliches Fluid kann von dem Raum oberhalb des Rekuperators in den Raum unterhalb des Rekuperators nur gelangen, indem es den Rekuperator durchströmt. Während eines Ansaughubs liegt der Rekuperator an der Oberseite des Kolbens an und folgt der Kolbenbewegung vom OT in den UT. Während eines ersten Teils der Verdichtung bewegt sich der Rekuperator weiterhin unter Anlage an der Oberseite des Kolbens zusammen mit dem Kolben vom UT in Richtung auf den OT und bewegt sich deutlich bevor der Kolben seinen OT erreicht weg vom Kolben in Anlage an den Zylinderkopf. Dabei wird die den Rekuperator durchströmende Zylinderladung vom Rekuperator erwärmt. Anschließend wird in die erwärmte Ladung Kraftstoff eingespritzt, der nach Selbstzündung verbrennt, so dass sich der Kolben in seinen UT bewegt, wobei der Rekuperator in Anlage an dem Zylinderkopf bleibt. Wenn sich der Kolben nach Erreichen seines UT zum Ausschieben der Ladung in Richtung auf den OT bewegt, bewegt sich der Rekuperator in Richtung auf den Kolben, so dass die verbrannte Ladung den Rekuperator durchströmt und ihn aufheizt. Anschließend bewegt sich der Rekuperator zusammen mit dem Kolben in dessen OT, so dass die zwischen dem Rekuperator und dem Zylinderkopf befindliche Ladung durch das offene Auslassventil hindurch ausgestoßen wird.

Der Erfindung liegt die Aufgabe zugrunde, ein Verfahren zum Betreiben einer Hubkolbenbrennkraftmaschine mit interner Abgasenergierekuperation sowie eine solche Hubkolbenbrennkraftmaschine zu schaffen, das bzw. die bei einfacher Durchführbarkeit bzw. einfachem Aufbau mit verbessertem Wirkungsgrad arbeitet.

Der das Verfahren betreffende Teil der Erfindungsaufgabe wird mit den Merkmalen des Anspruchs 1 gelöst.

Die Unteransprüche 2 bis 5 sind auf vorteilhafte Durchführungsformen des erfindungsgemäßen Verfahrens gerichtet.

Der Anspruch 6 kennzeichnet den Aufbau einer Hubkolbenbrennkraftmaschine zur Lösung des diesbezüglichen Teils der Erfindungsaufgabe.

Die erfindungsgemäße Hubkolbenbrennkraftmaschine wird mit den Merkmalen der Ansprüche 7 bis 10 in vorteilhafter Weise weitergebildet.

Ein Aspekt der Erfindung liegt darin, dass der Zylinderkopfrekuperator den Querschnitt des Zylinders nicht vollständig ausfüllt, so dass bei in seinem oberen Totpunkt befindlichen Rekuperator das Einlassventil geöffnet werden kann und die Frischladung neben dem Zylinderkopfrekuperator in den Zylinder einströmt. Während des Verdichtungshubs bewegt sich der Zylinderkopfrekuperator aus seinem oberen Totpunkt in einen unteren Totpunkt mit einem Hub, der deutlich kleiner ist als der Hub des Kolbens und bewegt sich am Ende des Verdichtungshubs in seinen oberen Totpunkt zurück. Während des Ausschubhubs bewegt sich der Zylinderrekuperator bei sich öffnendem Auslassventil aus seinem oberen Totpunkt heraus und bewegt sich beim Schließen des Auslassventils in seinen oberen Totpunkt zurück. Trotz des gegenüber dem Kolbenhub kleineren Hubs des Zylinderkopfrekuperators wird bezüglich der Ausnutzung der im Abgas enthaltenen thermischen Energie ein hoher Wirkungsgrad erzielt.

Die Erfindung wird im Folgenden anhand schematischer Zeichnungen beispielsweise und mit weiteren Einzelheiten erläutert.

Die Figuren 1 bis 5 zeigen Schnittansichten eines Zylinders einer Hubkolbenbrennkraftmaschine entsprechend aufeinander folgenden Phasen eines 4-Takt-Zyklus:
Figur 1: Ansaugphase (Einströmphase)
Figur 2: Verdichtungsphase
Figur 3: Zündung der Ladung
Figur 4: Expansionsphase
Figur 5: Ausschubphase
Figur 6 zeigt eine schematische perspektivische Ansicht eines Zylinderkopfrekuperators.

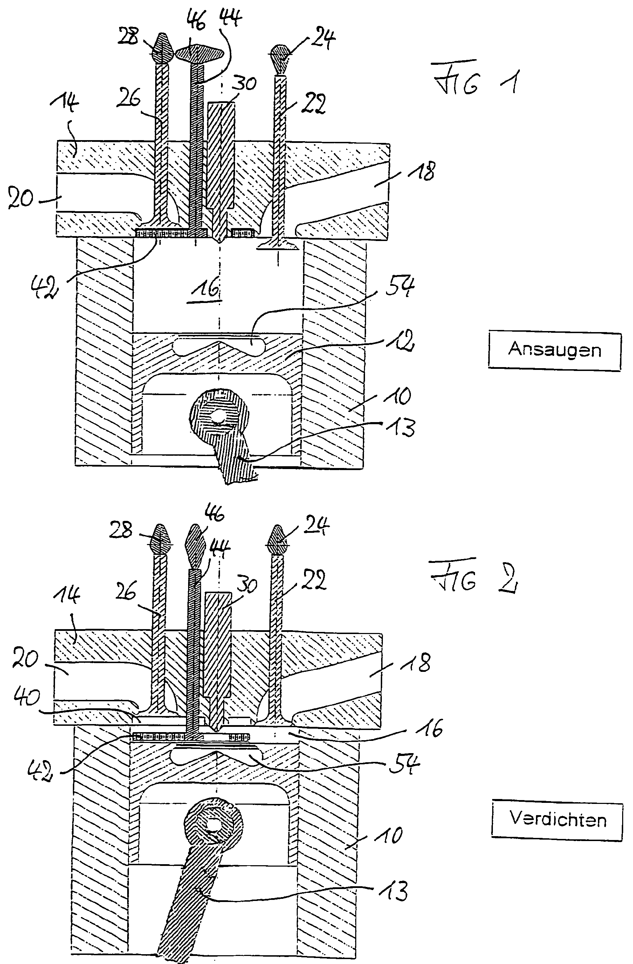

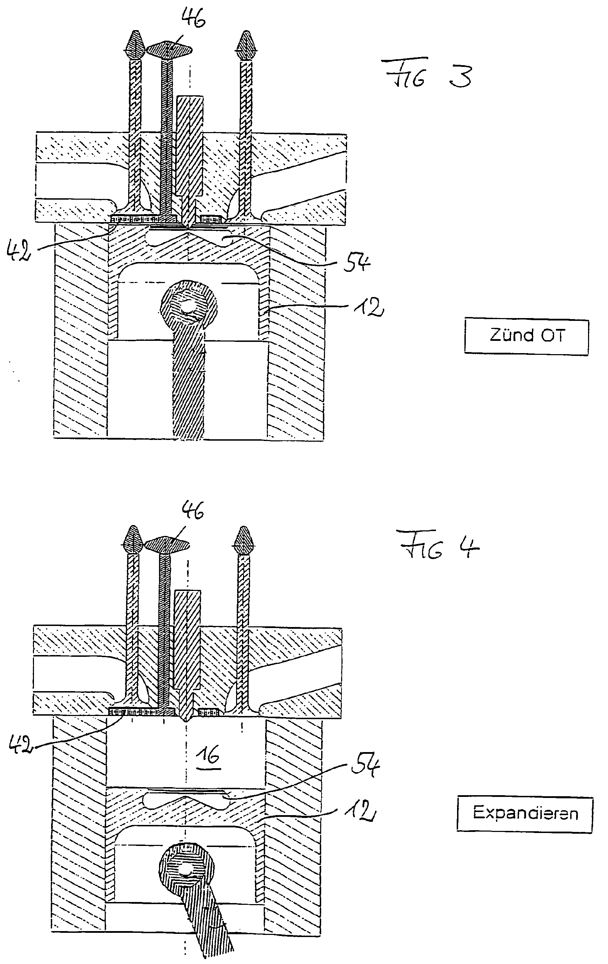

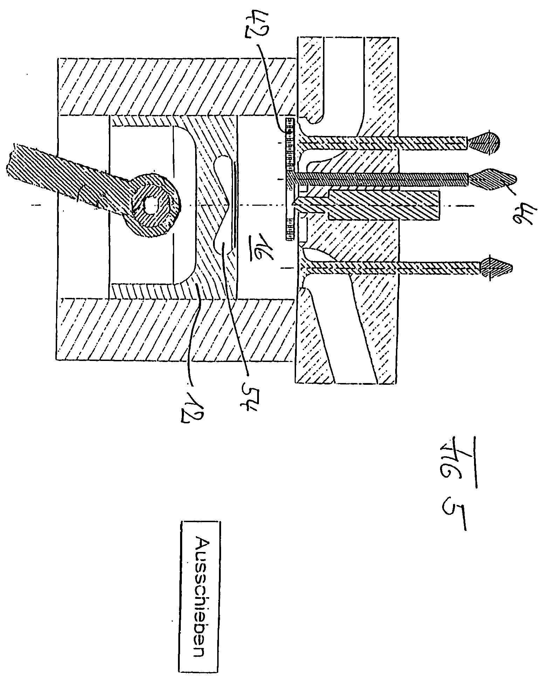

In den Figuren 1 bis 5 sind nur die Figuren 1 und 2 vollständig mit Bezugszeichen versehen. In den nachfolgenden Figuren 3 bis 5 sind der Übersichtlichkeit halber nur diejenigen Bauteile mit Bezugszeichen versehen, auf die besonders hingewiesen wird.

Gemäß Figuren 1 und 2 enthält eine Hubkolbenbrennkraftmaschine wenigstens einen Zylinder 10, in dem ein Kolben 12 auf- und abwärts bewegbar ist. Der Kolben 12 ist in an sich bekannter Weise über ein Pleuel 13 mit einem Kurbeltrieb verbunden, in dem die lineare Hin- und Herbewegung des Kolbens in eine Drehbewegung einer Kurbelwelle umgewandelt wird.

Der Zylinder 10 wird oben von einer Stirnwand 14 verschlossen, die durch einen Zylinderkopf gebildet ist und in der ein in die Arbeitskammer 16 des Zylinders 10 führender Einlasskanal 18 und ein aus der Arbeitskammer 16 herausführender Auslasskanal 20 ausgebildet sind.

In der Einlassöffnung, in der der Einlasskanal 18 in die Arbeitskammer 16 mündet, arbeitet ein Einlassventil 22, das von einem Einlassnocken 24 betätigt wird. In der Auslassöffnung, in der der Auslasskanal 20 von der Arbeitskammer 16 ausgeht, arbeitet ein Auslassventil 26, das von einem Auslassnocken 28 betätigt wird.

Bei Ausbildung der Brennkraftmaschine mit direkter Kraftstoffeinspritzung ist in der Stimwand 14 eine Einspritzdüse 30 angeordnet, mit der Kraftstoff in die Arbeitskammer 16 eingespritzt wird.

Die bisher beschrieben Anordnung ist an sich bekannt und wird daher nicht weiter beschrieben.

Die an die Arbeitskammer 16 angrenzende Seite der Stirnwand 14 ist mit einer Ausnehmung bzw. Tasche 40 ausgebildet, in der die an die Arbeitskammer 16 angrenzende Stirnseite der Stirnwand gegenüber dem mit der Einlassöffnung ausgebildeten Bereich der Stirnwand etwas weiter vom Kolben 12 entfernt ist. In der Tasche 40 ist ein insgesamt scheibenförmiger Zylinderkopfrekuperator 42 derart aufnehmbar, dass der Zylinderkopfrekuperator 42 die Tasche 40 zumindest annähernd füllt, zumindest annähernd in Anlage an dem geschlossenen Auslassventil 26 ist und zumindest annähernd bündig mit dem Bereich der Innenseite der Stirnwand 14 verläuft, in dem die Einlassöffnung angeordnet ist. Das geschlossene Einlassventil 22, der die Einlassöffnung umgebende Bereich der Stirnwand 14 und die der Arbeitskammer 16 zugewandte Seite des Zylinderkopfrekuperators 42 bilden somit vorteilhaft eine ebene Begrenzungsfläche der Arbeitskammer 16, wenn sich der Zylinderkopfrekuperator in seiner obersten Stellung (OTR) befindet.

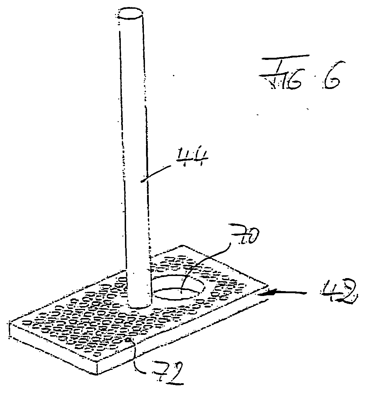

Der Zylinderkopfrekuperator 42 besteht aus hochtemperaturfestem Material und weist beispielsweise als kleine Bohrungen ausgebildete, parallel zur Achse des Zylinders verlaufende Durchlässe auf (Fig. 6).

Der Zylinderkopfrekuperator 42 ist starr mit wenigstens einem Schaft 44 verbunden, der unter Abdichtung durch die Stirnwand 14 bzw. den Zylinderkopf hindurchgeführt ist und von einem Rekuperatornocken 46 betätigt wird, der zwei sich im Wesentlichen gegenüberliegende Nockenerhebungen aufweist. Die Nocken 24, 28, 46 können an einer gemeinsamen in an sich bekannter Weise von der nicht dargestellten Kurbelwelle der Brennkraftmaschine angetriebenen Nockenwelle ausgebildet sein.

Der Zylinderkopfrekuperator 42 weist ein Loch derart auf, dass die Einspritzdüse 30 durch den Zylinderkopfrekuperator hindurch in die Arbeitskammer 16 einragt.

Der Kolben 12 weist eine im Querschnitt insgesamt ω-formige Brennraummulde 54 auf.

Fig. 6 zeigt eine schematische perspektivische Ansicht eines Beispiels eines Zylinderkopfrekuperators 42. Der Zylinderkopfrekuperator 42 ist durch eine Platte aus einem hochtemperaturfesten Werkstoff, beispielsweise Metall oder Keramik, gebildet und enthält ein Loch 70, durch das hindurch die Einspritzdüse 30 (Fig. 1) Kraftstoff in die Brennraummulde 54 (Fig. 3) einspritzt. Der plattenförmige Zylinderkopfrekuperator 42 ist mit einer Vielzahl von Durchlässen 72, beispielsweise Bohrungen, ausgebildet, so dass er quer zur Erstreckungsrichtung der Platte von Gas durchströmbar ist und in dem Gas enthaltene Wärmeenergie aufnimmt bzw. in ihm gespeicherte Wärmeenergie an das Gas abgibt. Der Zylinderkopfrekuperator 42 ist starr mit dem Schaft 44 verbunden oder einteilig mit dem Schaft 44 ausgebildet, der von dem Rekuperatornocken 46 betätigt wird. Die Form des im dargestellten Beispiel rechteckigen Zylinderkopfrekuperators 42 kann unterschiedlich sein. Vorteilhaft ist der Zylinderkopfrekuperator 42 derart ausgebildet, dass sein Außenumfang dem Innenumfang der Tasche 40 (Fig. 2) entspricht, dass er das oder die Auslassventile 26 vollständig überdeckt, das oder die Einlassventile 22 frei lässt und die Brennraummulde 54 (Fig. 2) weitgehend überdeckt.

Die Funktion der beschriebenen Anordnung ist wie folgt:

Gemäß Figur 1 befindet sich der Zylinderkopfrekuperator 42 während des Ansaugens (Saugmotor) bzw. Einströmens (aufgeladener Motor) bei geöffnetem Einlassventil 22 und geschlossenem Auslassventil 26 vollständig in der Tasche 40 der Stirnwand 14, vorteilhaft mit seiner Oberseite in Anlage an der Unterseite der Stirnwand 14 und dem Auslassventil 26. Die Frischladung bzw. Frischluft strömt somit unter vollständiger Umgehung des Zylinderkopfrekuperators 42 bzw. neben dem Zylinderkopfrekuperator 42 in die Arbeitskammer 16 ein, so dass die Frischladung bzw. Füllung durch den Zylinderkopfrekuperator 42 kaum beeinträchtigt wird.

Die Stellung des Zylinderkopfrekuperators gemäß Figur 1 ist dessen weitest angehobene Stellung und wird im Folgenden als OTR (oberer Totpunkt-Rekuperator) bezeichnet.

Wenn sich der Kolben 12 nach Beendigung des Ansaughubs und bei geschlossenem Auslassventil 22 aus seinem UT in Richtung auf den OT zum Verdichten der angesaugten Ladung bewegt, wird der Zylinderkopfrekuperator 42 von einer Erhebung des Rekuperatomockens 46 aus seinem OTR in einen unteren Totpunkt (UTR) bewegt. Der Hub des Zylinderkopfrekuperator 42 ist vorteilhaft etwas größer als die Tiefe der Tasche 40, so dass sich der Zylinderkopfrekuperator 42 aus der Tasche 40 heraus bewegt und Frischladung am Zylinderrekuperator vorbei in die Tasche 40 gelangt. Wie ersichtlich ist der Hub des Zylinderkopfrekuperators 42 zwischen OTR und UTR erheblich kleiner als der Hub des Kolbens 12 zwischen dessen UT und OT.

Wenn sich der Kolben 12 in seinen OT bewegt, wird der Zylinderkopfrekuperator 42 in die Tasche 40 zurückbewegt. Dabei liegt der Kolben 12 vorteilhaft zumindest annähernd am Zylinderkopfrekuperator 42 an, so dass verdichtete Frischladung aus der Tasche 40 durch den Zylinderkopfrekuperator 42 hindurch in die Brennraummulde 54 gedrückt wird.

Im OT des Kolbens wird die Stellung gemäß Figur 3 erreicht, in der die Brennraummulde 54 zumindest weitgehend von dem in seinem OTR befindlichen Zylinderkopfrekuperator verschlossen wird. Kurz vor Erreichen oder während dieser Stellung wird Kraftstoff, beispielsweise Dieselkraftstoff, aus der Einspritzdüse 30 in die Brennraummulde 54 eingespritzt und entzündet sich, so dass ein Arbeits- bzw. Expansionstakt beginnt, während dessen der Zylinderkopfrekuperator 42 in seinem OTR verbleibt (Fig. 4).

Wenn beim anschließenden Ausschubtakt bei der Bewegung des Kolbens 12 von seinem UT in den OT das Auslassventil 20 öffnet, wird der Zylinderkopfrekuperator 42 zunächst vor Beginn der Öffnungsbewegung des Auslassventils aus seinem OTR bewegt und zumindest vor dem Ende des Ausschubtaktes vollständig aus der Tasche 40 heraus bewegt. Der Bewegungshub des Zylinderkopfrekuperators 42 ist vorteilhaft etwas größer als der Öffnungshub des Auslassventils. Am Ende des Ausschubhubs, wenn der Kolben seinen OT erreicht, wird der Zylinderkopfrekuperator entsprechend dem sich schließenden Auslassventil 26 in seinen OTR zurückbewegt.

Während der geschilderten Bewegungsabläufe finden folgende Wärmeübertragungen statt:

Nachdem der Kolben 12 sich durch seinen UT bewegt hat, wird zu Beginn des Ausschiebens bis etwa 60° nach UT der Zylinderkopfrekuperator 42 nicht vollständig aus der Tasche 40 herausbewegt, so dass der achsparallele Außenrand des Zylinderkopfrekuperators 42 mit der achsparallelen inneren Umfangswand der Tasche 40 allenfalls einen Ringspalt mit kleinem Durchtrittsquerschnitt bildet, so dass die zunächst sehr heißen Verbrennungsgase durch den Zylinderkopfrekuperator 42 hindurch und das geöffnete Auslassventil in den Auslasskanal 20 strömen. Bei weiterer Bewegung des Kolbens 12 zum OT wird der Zylinderkopfrekuperator 42 von dem Rekuperatornocken 46 vollständig aus der Tasche 40 herausbewegt, so dass das dann bereits kühlere verbrannte Gas am Zylinderkopfrekuperator 42 vorbei in den Auslasskanal 20 gelangt. Auf diese Weise wird der Zylinderkopfrekuperator 42 während des Ausschubhubs vom Abgas stark aufgeheizt. Je nach den Betriebsbedingungen der Brennkraftmaschine, z.B. aufgeladen oder nicht aufgeladen, kann der Zylinderkopfrekuperator 42 bereits im UT des Kolbens oder beispielsweise erst 120° nach UT vollständig aus der Tasche heraus bewegt werden.

Wenn gegen Ende des Verdichtungshubs (Fig. 2) der aus der Tasche 40 vollständig herausbewegte Zylinderkopfrekuperator 42 in die Tasche 40 zurückbewegt wird, durchströmt die in der Tasche 40 befindliche Frischladung, die am Zylinderkopfrekuperator 42 vorbei in die Tasche 40 gelangt ist, den heißen Zylinderkopfrekuperator und nimmt dabei die in dem heißen Zylinderkopfrekuperator 42 gespeicherte Abgasenergie auf. Auf diese Weise wird die in der Brennraummulde 54 befindliche komprimierte Frischladung unmittelbar vor der Zündung stark aufgeheizt, wodurch der Wirkungsgrad der Brennkraftmaschine deutlich verbessert wird, da die Kompressionsendtemperatur durch die Wärmerückgewinnung erst unmittelbar vor der Verbrennung angehoben wird.

Der Zylinderkopfrekuperator 42 kann vorteilhafterweise vollständig aus der Tasche 40 herausbewegt werden, so dass die Innenumfangswand der Taschen 40 und der Außenumfang des Zylinderkopfrekuperators 42 entsprechend achsparallel ausgebildet werden können und eine Gasströmung weitgehend durch den Zylinderkopfrekuperator 42 hindurch erfolgen muss, sobald sich dieser zumindest teilweise in der Tasche 40 befindet.

Wie sich aus dem Vorstehenden ergibt, kann die Bewegung des Zylinderkopfrekuperators 42 relativ zur Tasche 40 während des Verdichtungshubs verschieden von der während des Ausschubhubs sein, so dass die beiden Nockenerhebungen des Rekuperatornockens 46 unterschiedlich sein können.

Bezug nehmend auf die Figur 2 kann die Anordnung des Zylinderkopfrekuperators 52 relativ zur Brennraummulde 54 vorteilhafterweise derart sein, dass am Ende des Verdichtungshubs unterhalb des Einlassventils 22 befindliche verdichtete Ladung durch einen Spalt zwischen dem Zylinderkopfrekuperator 42 und dem Kolben 52 in die Brennraummulde 54 gelangt. Insgesamt ist es vorteilhaft, wenn die Brennraummulde 54 im OT des Kolbens (Fig. 3) möglichst vollständig vom Zylinderkopfrekuperator 42 verschlossen wird.

Die beispielhaft beschriebene Anordnung kann vielfältig abgeändert werden. Beispielsweise kann die Wandung der Brennraummulde 54 relativ zum Kolben 12 thermisch isoliert sein.

Bei Ausbildung der Brennkraftmaschine als Ottomotor kann zusätzlich eine Zündkerze vorgesehen sein. Weiter kann die Gemischbildung extern folgen, so dass die Einspritzdüse 30 durch eine Zündkerze ersetzt werden kann.

### Bezugszeichenliste

- 10: Zylinder
- 12: Kolben
- 13: Pleuel
- 14: Stirnwand
- 16: Arbeitskammer
- 18: Einlasskanal
- 20: Auslasskanal
- 22: Einlassventil
- 24: Einlassnocken
- 26: Auslassventil
- 28: Auslassnocken
- 30: Einspritzdüse
- 40: Tasche
- 42: Zylinderkopfrekuperator
- 44: Schaft
- 46: Rekuperatornocken
- 70: Loch

## Patentansprüche

1. Verfahren zum Betreiben einer Hubkolbenbrennkraftmaschine mit interner Abgasenergierekuperation, wobei in einem Zylinder (10) durch einen in axialer Richtung des Zylinders hin und her beweglichen Kolben (12) und eine mit wenigstens einem Einlassventil (22) und einem Auslassventil (26) versehene Stirnwand (14) eine Arbeitskammer (16) begrenzt ist, in der ein Zylinderkopfrekuperator (42) in axialer Richtung des Zylinders hin und her beweglich ist, der nur einen von dem Einlassventil nicht überdeckten Teil des Querschnitts der Arbeitskammer überdeckt, enthaltend folgende Schritte:
- Einströmen von Frischladung bei geöffnetem Einlassventil (22) und geschlossenem Auslassventil (26) durch Bewegen des Kolbens (12) von seinem oberen Totpunkt (OT) zu seinem unteren Totpunkt (UT), wobei sich der Zylinderkopfrekuperator (42) während des Ansaugens in einem oberen Totpunkt (OTR) befindet, so dass Frischladung an dem Zylinderkopfrekuperator vorbei in die Arbeitskammer (16) einströmt,
- Verdichten der angesaugten Ladung bei geschlossenem Einlassventil (22) und geschlossenem Auslassventil (26) durch Bewegen des Kolbens (12) vom UT zum OT, wobei der Zylinderkopfrekuperator (42) während der Verdichtung aus seinem OTR in einen unteren Totpunkt (UTR) mit einem Hub zwischen OTR und UTR kleiner als der Hub des Kolbens zwischen OT und UT bewegt wird und am Ende der Verdichtung in seinen OTR zurück bewegt wird,
- Verbrennen der verdichteten Frischladung bei geschlossenem Einlassventil (22) und geschlossenem Auslassventil (26) und Bewegen des Kolbens vom OT in den UT bewegt, wobei der Zylinderkopfrekuperator (42) im OTR bleibt, und
- Ausschieben der verbrannten Ladung bei offenem Auslassventil (26) und geschlossenem Einlassventil (22) durch Bewegen des Kolbens (12) vom UT zum OT, wobei der Zylinderkopfrekuperator (42) bei sich öffnendem Auslassventil aus seinem OTR bewegt wird und beim Schließen des Auslassventils am Ende des Ausschiebens mit sich schließendem Auslassventil in den OTR zurückbewegt wird.

2. Verfahren nach Anspruch 1, wobei der Zylinderkopfrekuperator in seiner OTR Stellung an der Stirnwand(14) und dem geschlossenem Auslassventil(26) zumindest annähernd anliegt und in einer Tasche (40) der Stirnwand (14) des Zylinders (10) aufgenommen wird, deren Tiefe kleiner als der Hub des Zylinderkopfrekuperators (42) zwischen OTR und UTR ist.

3. Verfahren nach Anspruch 2, wobei der Raum zwischen dem Zylinderkopfrekuperator (42) und der Tasche (40) mit der Arbeitskammer (16) durch einen außerhalb des Zylinderkopfrekuperators gebildeten Pfad erst verbunden wird, wenn sich der Zylinderkopfrekuperator aus der Tasche heraus bewegt hat.

4. Verfahren nach Anspruch 2 oder 3, wobei der Zylinderkopfrekuperator (42) zumindest vor dem Ende des Ausschiebens der verbrannten Ladung vollständig aus der Tasche heraus bewegt wird.

5. Verfahren nach einem der Ansprüche 2 bis 4, wobei der Zylinderkopfrekuperator am Ende eines Verdichtungshubs derart in die Tasche zurückbewegt wird, dass in dem Raum zwischen der Tasche und dem Zylinderkopfrekuperator befindliche verdichtete Ladung erst unmittelbar vor der Zündung der Ladung durch den Zylinderkopfrekuperator hindurch in den zwischen dem Kolben und dem Zylinderkopfrekuperator ausgebildeten Brennraum einströmt.

6. Hubkolbenbrennkraftmaschine mit interner Abgasenergierekuperation, enthaltend einen Zylinder (10), in dem eine Arbeitskammer (16) von einem hin- und her beweglichen Kolben (12) und einer Stirnwand (14) begrenzt wird, in der wenigstens ein Einlassventil (22) und ein Auslassventil (26) angeordnet sind,
einen zwischen dem Kolben und der Stirnwand hin und her beweglichen Zylinderkopfrekuperator (42), der nur einen vom dem Einlassventil nicht überdeckten Teil des Querschnitts der Arbeitskammer überdeckt und in Richtung seiner Bewegbarkeit von einem Fluid durchströmbar ist, und
eine Betätigungseinrichtung (24, 28, 44, 46) zur Abstimmung der Bewegungen des Kolbens, der Ventile und des Zylinderkopfrekuperators aufeinander derart, dass ein Verfahren mit folgenden Schritten durchgeführt wird:
- Einströmen von Frischladung bei geöffnetem Einlassventil (22) und geschlossenem Auslassventil (26) durch Bewegen des Kolbens (12) von seinem oberen Totpunkt (OT) zu seinem unteren Totpunkt (UT), wobei sich der Zylinderkopfrekuperator (42) während des Ansaugens in einem oberen Totpunkt (OTR) befindet, so dass Frischladung an dem Zylinderkopfrekuperator vorbei in die Arbeitskammer (16) einströmt,
- Verdichten der angesaugten Ladung bei geschlossenem Einlassventil (22) und geschlossenem Auslassventil (26) durch Bewegen des Kolbens (12) vom UT zum OT, wobei der Zylinderkopfrekuperator (42) während der Verdichtung aus seinem OTR in einen unteren Totpunkt (UTR) mit einem Hub zwischen OTR und UTR kleiner als der Hub des Kolbens zwischen OT und UT bewegt wird und am Ende der Verdichtung in seinen OTR zurück bewegt wird,
- Verbrennen der verdichteten Frischladung bei geschlossenem Einlassventil (22) und geschlossenem Auslassventil (26) und Bewegen des Kolbens vom OT in den UT bewegt, wobei der Zylinderkopfrekuperator (42) im OTR bleibt, und
- Ausschieben der verbrannten Ladung bei offenem Auslassventil (26) und geschlossenem Einlassventil (22) durch Bewegen des Kolbens (12) vom UT zum OT, wobei der Zylinderkopfrekuperator (42) bei sich öffnendem Auslassventil aus seinem OTR bewegt wird und beim Schließen des Auslassventils am Ende des Ausschiebens mit sich schließendem Auslassventil in den OTR zurückbewegt wird.

7. Hubkolbenbrennkraftmaschine nach Anspruch 6, wobei die Stirnwand (14) des Zylinders in dem Bereich, in dem das wenigstens eine Auslassventil (26) angeordnet ist, in Richtung weg vom Kolben (12) zurückversetzt ist, so dass eine Tasche (40) gebildet ist, in der der Zylinderkopfrekuperator (42) in seinem OTR aufgenommen ist.

8. Hubkolbenbrennkraftmaschine nach Anspruch 6 oder 7, wobei in der Stirnwand (14) eine Einspritzdüse (30) angeordnet ist, die durch ein im Zylinderkopfrekuperator (42) ausgebildetes Loch Kraftstoff in die Arbeitskammer (16) einspritzt.

9. Hubkolbenbrennkraftmaschine nach einem der Ansprüche 6 bis 8, wobei der Zylinderkopfrekuperator (42) starr mit wenigstens einem Schaft (44) verbunden ist, der durch die Stirnwand (14) unter Abdichtung verschiebbar hindurchgeführt ist.

10. Hubkolbenbrennkraftmaschine nach Anspruch 9, wobei der Schaft (44) von einem Nocken (46) betätigbar sind.

## Claims

1. Method for operating a reciprocating-piston internal combustion engine having internal exhaust gas energy recuperation, wherein in a cylinder (10) a power chamber (16) is delimited by a piston (10), which is reciprocally movable in an axial direction of the cylinder, and by a front wall (14) provided with at least one intake valve (22) and at least one exhaust valve (26), in which power chamber (16) a cylinder head recuperator (42) is reciprocally movable in the axial direction of the cylinder and covers only a portion of the cross-section of-the-power chamber that is not covered by the intake valve, the method comprising the following steps:
- flowing-in of fresh charge by moving the piston (12) from its top dead center (TDC) to its bottom dead center (BDC) with the intake valve (22) open and the exhaust valve (26) closed, wherein the cylinder head recuperator (42) is located in a top dead center (TDCR) during the intake, so that fresh charge flows into the power chamber (16) by passing around the cylinder head recuperator,
- compressing of the intaken charge by moving the piston (12) from the BDC to the TDC with the intake valve (22) closed and the exhaust valve (26) closed, wherein the cylinder head recuperator (42) is moved during the compression from its TDCR into a bottom dead center (BDCR) with a stroke between the TDCR and the BDCR that is smaller than the stroke of the piston between the TDC and BDC, and is moved back into its TDCR at the end of the compression,
- combusting of the compressed fresh charge with the intake valve (22) closed and the exhaust valve (26) closed and with movement of the piston from the TDC to the BDC, wherein the cylinder head recuperator (42) remains in the TDCR, and
- exhausting of the combusted charge with the exhaust valve (26) open and the intake valve (22) closed by movement of the piston (12) from the BDC to the TDC, wherein the cylinder head recuperator (42) is moved from its TDCR with the opening exhaust valve and, when closing the exhaust valve at the end of the exhausting, is moved back into the TDCR with the closing exhaust valve.

2. Method according to claim 1, wherein the cylinder head recuperator in its TDCR position at least substantially abuts on the front wall (14) and on the closed exhaust valve (26), and is stored in a recess (40) of the front wall (14) of the cylinder (10), the depth of which recess is smaller than the stroke of the cylinder head recuperator (42) between the TDCR and the BDCR.

3. Method according to claim 2, wherein the space between the cylinder head recuperator (42) and the recess (40) is connected with the power chamber (16) by a path formed outside of the cylinder head recuperator when the cylinder head recuperator has moved out of the recess.

4. Method according to claim 2 or 3, wherein the cylinder head recuperator (42) is completely moved out of the recess at least before the end of the exhausting of the combusted charge.

5. Method according to one of claims 2 to 4, wherein the cylinder head recuperator (42) is moved back into the recess at the end of the compression stroke such that compressed charge, which is located in the space between the recess and the cylinder head recuperator first flows through the cylinder head recuperator into the combustion chamber, which is formed between the piston and the cylinder head recuperator, immediately before the ignition of the charge.

6. Reciprocating-piston internal combustion engine having internal exhaust gas energy recuperation, comprising a cylinder (10), in which a power chamber (16) is delimited by a reciprocally-moving piston (12) and by a front wall (14), in which at least one intake valve (22) and at least one exhaust valve (26) are disposed,
a cylinder head recuperator (42) that is reciprocally movable between the piston and the front wall, covers only a portion of the cross-section of the power chamber that is not covered by the intake valve, and is permeable by a fluid in a direction of its moveability, and
an actuating device (24, 28, 44, 46) for coordinating the movements of the piston, the valves and the cylinder head recuperator (42) with respect to one another such that a method comprising the following steps is carried out:
- flowing-in of fresh charge by moving the piston (12) from its top dead center (TDC) to its bottom dead center (BDC) with the intake valve (22) open and the exhaust valve (26) closed, wherein the cylinder head recuperator (42) is located in a top dead center (TDCR) during the intake, so that fresh charge flows into the power chamber (16) by passing around the cylinder head recuperator,
- compressing of the intaken charge by moving the piston (12) from the BDC to the TDC with the intake valve (22) closed and the exhaust valve (26) closed, wherein the cylinder head recuperator (42) is moved during the compression from its TDCR into a bottom dead center (BDCR) with a stroke between the TDCR and the BDCR that is smaller than the stroke of the piston between the TDC and BDC, and is moved back into its TDCR at the end of the compression,
- combusting of the compressed fresh charge with the intake valve (22) closed and the exhaust valve (26) closed and with movement of the piston from the TDC into the BDC, wherein the cylinder head recuperator (42) remains in the TDCR, and
- exhausting of the combusted charge with the exhaust valve (26) open and the intake valve (22) closed by movement of the piston (12) from the BDC to the TDC, wherein the cylinder head recuperator (42) is moved from its TDCR with the opening exhaust valve and, when closing the exhaust valve at the end of the exhausting, is moved back into the TDCR with the closing exhaust valve.

7. Reciprocating-piston internal combustion engine according to claim 6, wherein the front wall (14) of the cylinder in the area, in which the at least one exhaust valve (26) is disposed, is offset in a direction away from the piston (12) such that a recess (40) is formed, in which the cylinder head recuperator (42) is stored in its TDCR.

8. Reciprocating-piston internal combustion engine according to claim 6 or 7, wherein an injection nozzle (30) is disposed in the front wall (14), which injects fuel into the power chamber (16) through a hole formed in the cylinder head recuperator (42).

9. Reciprocating-piston internal combustion engine according to one of claims 6 to 8, wherein the cylinder head recuperator (42) is rigidly connected with at least one shaft (44), which is displaceably guided through the front wall (14) in a sealed manner.

10. Reciprocating-piston internal combustion engine according to claim 9, wherein the shaft (44) is actuated by a cam (46).

## Revendications

1. Procédé servant à faire fonctionner un moteur à combustion interne à pistons alternatifs comprenant un système de récupération de l'énergie des gaz d'échappement, où une chambre de travail (16) est délimitée, dans un cylindre (10), par un piston (12) effectuant des mouvements de va-et-vient dans le sens axial du cylindre et par une paroi frontale (14) pourvue au moins d'une soupape d'entrée (22) et d'une soupape de sortie (26), dans laquelle chambre de travail un système récupérateur de culasse (42) effectue des mouvements de va-et-vient dans le sens axial du cylindre, lequel ne recouvre qu'une partie, non recouverte par la soupape d'entrée, de la section transversale de la chambre de travail, comprenant les étapes suivantes :
- faire affluer une charge fraîche, lorsque la soupape d'entrée (22) est ouverte et que la soupape de sortie (26) est fermée, en déplaçant le piston (12) de son point mort supérieur (OT) à son point mort inférieur (UT), où le système récupérateur de culasse (42) se trouve à un point mort supérieur (OTR) au cours de l'aspiration de sorte qu'une charge fraîche afflue dans la chambre de travail (16) en passant par le système récupérateur de culasse,
- condenser la charge aspirée, lorsque la soupape d'entrée (22) est fermée et que la soupape de sortie (26) est fermée, en déplaçant le piston (12) du point UT au point OT, où le système récupérateur de culasse (42) est déplacé, au cours de la condensation, de son point OTR à un point mort inférieur (UTR) selon une course entre le point OTR et le point UTR qui est inférieure à la course du piston entre le point OT et le point UT et revient à son point OTR à la fin de la condensation,
- brûler la charge fraîche condensée, lorsque la soupape d'entrée (22) est fermée et que la soupape de sortie (26) est fermée, en déplaçant le piston du point OT au point UT, où le système récupérateur de culasse (42) reste au point OTR, et
- évacuer la charge brûlée, lorsque la soupape de sortie (26) est ouverte et que la soupape d'entrée (22) est fermée, en déplaçant le piston (12) du point UT au point OT, où le système récupérateur de culasse (42) est déplacé de manière à quitter son point OTR lorsque la soupape de sortie est en cours d'ouverture et revient au point OTR lors de la fermeture de la soupape de sortie, à la fin de l'évacuation avec la soupape de sortie en cours de fermeture.

2. Procédé selon la revendication 1, où le système récupérateur de culasse repose, au moins approximativement, dans sa position OTR, au niveau de la paroi frontale (14) et au niveau de la soupape de sortie (26) fermée et est reçu dans une poche (40) de la paroi frontale (14) du cylindre (10), dont la profondeur est inférieure à celle de la course du système récupérateur de culasse (42) entre le point OTR et le point UTR.

3. Procédé selon la revendication 2, où l'espace entre le système récupérateur de culasse (42) et la poche (40) est relié à la chambre de travail (16) par un chemin formé à l'extérieur du système récupérateur de culasse seulement lorsque le système récupérateur de culasse est sorti de la poche.

4. Procédé selon la revendication 2 ou 3, où le système récupérateur de culasse (42) sort totalement de la poche au moins avant la fin de l'évacuation de la charge brûlée.

5. Procédé selon l'une quelconque des revendications 2 à 4, où le système récupérateur de culasse est ramené dans la poche à la fin d'une course de condensation de telle manière que la charge condensée se trouvant dans l'espace entre la poche et le système récupérateur de culasse afflue à travers le système récupérateur de culasse dans la chambre de combustion réalisée entre le piston et le système récupérateur de culasse seulement immédiatement avant l'allumage de la charge.

6. Moteur à combustion interne à pistons alternatifs comprenant un système interne de récupération de l'énergie des gaz d'échappement, contenant un cylindre (10), dans lequel une chambre de travail (16) est délimitée par un piston (12) effectuant des mouvements de va-et-vient et une paroi frontale (14), dans laquelle au moins une soupape d'entrée (22) et une soupape de sortie (26) sont disposées,
un système récupérateur de culasse (42) effectuant des mouvements de va-et-vient entre le piston et la paroi frontale, lequel système récupérateur de culasse recouvre uniquement une partie, non recouverte par la soupape d'entrée, de la section transversale de la chambre de travail et peut être parcouru par un fluide dans le sens de ses possibilités de mouvement, et
un dispositif d'actionnement (24, 28, 44, 46) servant à coordonner entre eux les mouvements du piston, des soupapes et du système récupérateur de culasse de manière à mettre en oeuvre un procédé comprenant les étapes suivantes :
- faire affluer une charge fraîche, lorsque la soupape d'entrée (22) est ouverte et que la soupape de sortie (26) est fermée, en déplaçant le piston (12) de son point mort supérieur (OT) à son point mort inférieur (UT), où le système récupérateur de culasse (42) se trouve à un point mort supérieur (OTR) au cours de l'aspiration de sorte que de la charge fraîche afflue dans la chambre de travail (16) en passant le long du système récupérateur de culasse,
- condenser la charge aspirée, lorsque la soupape d'entrée (22) est fermée et que la soupape de sortie (26) est fermée, en déplaçant le piston (12) du point UT au point OT, où le système récupérateur de culasse (42) est déplacé, au cours de la condensation, de son point OTR à un point mort inférieur (UTR) selon une course entre le point OTR et le point UTR qui est inférieure à la course du piston entre le point OT et le point UT et revient à son point OTR à la fin de la condensation,
- brûler la charge fraîche condensée, lorsque la soupape d'entrée (22) est fermée et que la soupape de sortie (26) est fermée, en déplaçant le piston du point OT au point UT, où le système récupérateur de culasse (42) reste au point OTR, et
- évacuer la charge brûlée, lorsque la soupape de sortie (26) est ouverte et que la soupape d'entrée (22) est fermée, en déplaçant le piston (12) du point UT au point OT, où le système récupérateur de culasse (42) est déplacé de manière à quitter son point OTR lorsque la soupape de sortie est en cours d'ouverture et revient au point OTR lors de la fermeture de la soupape de sortie, à la fin de l'évacuation avec la soupape de sortie en cours de fermeture.

7. Moteur à combustion interne à pistons alternatifs selon la revendication 6, où la paroi frontale (14) du cylindre est décalée dans un sens de manière à s'éloigner du piston (12), dans la zone dans laquelle l'au moins une soupape de sortie (26) est disposée, de sorte qu'une poche (40) est formée, dans laquelle le système récupérateur de culasse (42) est reçu à son point OTR.

8. Moteur à combustion interne à pistons alternatifs selon la revendication 6 ou 7, où une buse d'injection (30) est disposée dans la paroi frontale (14), laquelle buse d'injection injecte du carburant dans la chambre de travail (16) par un trou réalisé dans le système récupérateur de culasse (42).

9. Moteur à combustion interne à pistons alternatifs selon l'une quelconque des revendications 6 à 8, où le système récupérateur de culasse (42) est relié de manière rigide à au moins une tige (44), qui est guidée, de manière à pouvoir être coulissée, tout en assurant l'étanchéité, à travers la paroi frontale (14).

10. Moteur à combustion interne selon la revendication 9, où la tige (44) peut être actionnée par une came (46).
